(19) 

Europäisches Patentamt
European Patent Office
Office européen des brevets

(11) **EP 4 345 698 A1**

(12) **EUROPEAN PATENT APPLICATION**

(43) Date of publication:
**03.04.2024   Bulletin 2024/14**

(51) International Patent Classification (IPC):
**G06N 10/40** *(2022.01)*

(21) Application number: **22306463.5**

(22) Date of filing: **30.09.2022**

(52) Cooperative Patent Classification (CPC):
**G06N 10/40**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicants:
- **Université de Strasbourg**
  **67000 Strasbourg (FR)**
- **Centre National de la Recherche Scientifique**
  **75016 Paris (FR)**

- **The Trustees of Princeton University**
  **Princeton, NJ 08540 (US)**

(72) Inventors:
- **PUPILLO, Guido**
  **67100 Strasbourg (FR)**
- **JANDURA, Sven**
  **67100 Strasbourg (FR)**
- **THOMPSON, Jeffrey**
  **Princeton 08540 (US)**

(74) Representative: **Lavoix**
  **2, place d'Estienne d'Orves**
  **75441 Paris Cedex 09 (FR)**

(54) **A METHOD FOR OPTIMIZING A QUANTUM OPERATION TO BE APPLIED ON TWO QUANTUM OBJECTS OF A SYSTEM OF QUANTUM OBJECTS**

(57)     The present invention relates to a method for optimizing a quantum operation to be applied on at least two quantum objects (12) of a system (10) of quantum objects, the method comprising the determination of an optimized pulse to be generated by at least one controlled laser for implementing the quantum operation on the at least two quantum objects (12) while fulfilling a robustness criterion, the at least two quantum objects (12) having a quantum state depending on the excitation level of the at least two quantum objects, the excitation level being chosen between 01, 10 and 11, 0 defining a de-excited state for a quantum object and 1 defining an excited state for a quantum object, the quantum state having a zero order term and a first order term.

FIG.1

EP 4 345 698 A1

**Description**

TECHNICAL FIELD OF THE INVENTION

The present invention concerns methods for optimizing a quantum operation to be applied on two quantum objects of a system of quantum objects. The present invention also concerns devices for optimizing a quantum operation to be applied on two quantum objects of a system of quantum objects.

BACKGROUND OF THE INVENTION

Rydberg atoms have become a promising candidate to realize quantum computations and quantum simulations. In this platform, alkali, alkaline-earth or alkaline- earth-like atoms are trapped in arrays of optical tweezers and cooled to sub-milikelvin temperatures. Each atom serves as a qubit, with the computational subspace spanned by two stable or metastable states. Two-qubit gates can be implemented by using a laser to excite the atoms to auxiliary Rydberg states, which interact via the strong and long ranged van der Waals interaction. Recently, several implementations of a controlled-Z (CZ) gate using a global laser pulse, which illuminates both atoms and does not require individual addressing, have been proposed.

However, like all quantum computation platforms, calculations on Rydberg atoms currently suffer from imperfections, which prevent the execution on long quantum circuits. Relevant error sources include the finite lifetime of the Rydberg state, imperfections of the laser pulse perceived by the atoms, and the dependency of the interactions strengths of the atoms on the position of the atoms, which fluctuates in the trap. The imperfections of the laser pulse can be grouped into two categories: intensity and frequency noise inherent to the laser, and imperfections related to the uncertain atomic positions and velocities. The latter category consists of errors induced by the Doppler shift due to the thermal motion of the atoms, as well as the uncertainty of the laser intensity if it is not spatially homogeneous.

SUMMARY OF THE INVENTION

There is therefore a need for a method enabling to reduce the errors affecting a two qubits quantum operation.

To this end, the invention relates to a method for optimizing a quantum operation to be applied on at least two quantum objects of a system of quantum objects, the method comprising the determination of an optimized pulse to be generated by at least one controlled laser for implementing the quantum operation on the at least two quantum objects while fulfilling an amplitude robustness criterion, the at least two quantum objects having a quantum state depending on the excitation level of the at least two quantum objects, the excitation level being chosen between 01, 10 and 11, 0 defining a de-excited state for a quantum object and 1 defining an excited state for a quantum object, the quantum state having a zero order term and a first order term, the amplitude robustness criterion stating that the optimized pulse is a pulse which when applied on the at least two quantum objects is such that:

○ the zero order term is substantially of the form $e^{i\theta q}|q\rangle$, with $\theta_{11} - \theta_{10} - \theta_{01} = (2n + 1)\pi$, n being an integer,
○ the first order term is substantially equal to zero,

the optimized pulse being intended to be generated by the at least one controlled laser and applied on the at least two quantum objects so as to realize the quantum operation.

The method may comprise one or more of the following features considered alone or in any combination that is technically possible:

- the amplitude robustness criterion states that the optimized pulse is a pulse which minimizes a cost function, the cost function being the sum of a first cost term depending on the zero order term of the quantum state and of a second cost term ($J_2$) depending on the first order term of the quantum state;
- the cost function (J) is given by the following formula:

$$J = 1 - F + \sum_q \left\langle \Psi_q^{(1)} \middle| \Psi_q^{(1)} \right\rangle$$

Where:

- $|q\rangle$ is the initial state, where q labels the initial excitation level of the at least two quantum objects,

- $|\Psi_q\rangle$ is the final state when starting in the initial state $|q\rangle$,
- $\left|\psi_q^{(0)}\right\rangle$ is the zero order term of the quantum state $|\Psi_q\rangle$,
- $\left|\psi_q^{(1)}\right\rangle$ is the first order term of the quantum state $|\Psi_q\rangle$,
- F is the fidelity of the quantum operation given by:

$$F = \frac{1}{16}\left|1 + \sum_{q\in\{10,01,11\}} e^{-i\theta_q}\left\langle q\middle|\psi_q^{(0)}\right\rangle\right|^2$$

- the amplitude robustness criterion states that the optimized pulse is the shortest pulse minimizing the cost function among the pulses minimizing the cost function.

The invention also relates to a method for optimizing a quantum operation to be applied on at least two quantum objects of a system of quantum objects, the method comprising the determination of an optimized pulse to be generated by at least one controlled laser for implementing the quantum operation on the at least two quantum objects while fulfilling a Doppler robustness criterion, the at least two quantum objects having a quantum state depending on the excitation level of the at least two quantum objects, the excitation level being chosen between 01, 10 and 11, 0 defining a de-excited state for a quantum object and 1 defining an excited state for a quantum object, the quantum state having a zero order term and a first order term, the Doppler robustness criterion stating that the optimized pulse is a pulse which when applied on the at least two quantum objects is such that:

○ the zero order term is substantially of the form $e^{i\theta q}|q\rangle$, with $\theta_{11} - \theta_{10} - \theta_{01} = \left(2n + \frac{1}{2}\right)\pi$ , n being an integer,
○ the first order term for each quantum object is substantially along the direction of $|q\rangle$, q being the excitation level of the at least two quantum objects,

the optimized pulse being intended to be generated by the at least one controlled laser and applied on the at least two quantum objects so as to realize the quantum operation.

The method may comprise one or more of the following features considered alone or in any combination that is technically possible:

- the at least one controlled laser has a wavevector and each quantum object has a velocity along the direction of the laser propagation, the Doppler shift of each quantum object being the product of the wavevector of the at least one controlled laser and the velocity of said quantum object, the optimized pulse being a pulse formed of two identical halve, the two halves of the optimized pulse being intended to be applied on the quantum objects after each other by the at least one controlled laser so that the sign of the Doppler shift is switched between the two halves;
- each half of the optimized pulse is intended to be applied with a different counterpropagating laser;
- each half of the optimized pulse is intended to be applied by the same controlled laser, the controlled laser being turned off after the first half and turned back on after a waiting time so as to applied the second half, preferably the waiting time being substantially equal to $\frac{\pi}{w_{tr}}$ , $w_{tr}$ being the frequency of the change of the sign of the velocity of the quantum objects in the direction of the laser propagation;
- the Doppler robustness criterion states that the optimized pulse is a pulse which minimizes a cost function, the cost function being the sum of a first cost term depending on the zero order term of the quantum state and of a second cost term depending on the first order term of the quantum state.
- the cost function is given by the following formula:

$$J = 1 - F + \sum_{q,j}\left\langle\psi_q^{(1,j)}(\tau)\middle|I - |q\rangle\langle q|\psi_q^{(1,j)}(\tau)\right\rangle$$

- $|q\rangle$ is the initial state, where q labels the initial excitation level of the at least two quantum objects ,
- $\left|\Psi_q^{(0)}\right\rangle$ is the zero order term of the quantum state $|\Psi_q\rangle$,
- $\left|\Psi_q^{(1)}\right\rangle$ is the first order term of the quantum state $|\Psi_q\rangle$,
- j indexing with respect to the detuning of which one of the at least two quantum objects the expansion is done,
- F is the fidelity of the quantum operation given by:

$$F = \frac{1}{16}\left|1 + \sum_{q \in \{10,01,11\}} e^{-i\theta_q}\left\langle q\middle|\Psi_q^{(0)}\right\rangle\right|^2$$

- I is the identity operator,
- $\tau$ is the duration of the half of the pulse.

The invention also relates to a method for optimizing a quantum operation to be applied on at least two quantum objects of a system of quantum objects, the method comprising the determination of an optimized pulse to be generated by at least one controlled laser for implementing the quantum operation on the at least two quantum objects while fulfilling an amplitude and Doppler robustness criterion, the at least two quantum objects having a quantum state depending on the excitation level of the at least two quantum objects, the excitation level being chosen between 01, 10 and 11, 0 defining a de-excited state for a quantum object and 1 defining an excited state for a quantum object, the quantum state having a zero order term and a first order term, the amplitude and Doppler robustness criterion stating that the optimized pulse is a pulse minimizing a total cost function, the total cost function being the sum of the cost function of the two above methods, preferably the optimized pulse being the shortest pulse minimizing the total cost function among the pulses minimizing the total cost function, the optimized pulse being intended to be generated by the at least one controlled laser and applied on the at least two quantum objects so as to realize the quantum operation.

All of the above methods may comprise one or more of the following features considered alone or in any combination that is technically possible:

- the laser pulses minimizing the considered cost function are found using an algorithm assuming that the pulse ($\Omega(t)$) is a piecewise constant pulse of duration $\tau$ described by N parameters $\Omega_1, ..., \Omega_N$ as $\Omega(t)= \Omega_j$ if $t \in \left[\frac{(j-1)\tau}{N}, \frac{j\tau}{N}\right]$, j being an integer belonging to the interval [1, ..., N], the pulse ($\Omega(t)$) minimizing the considered cost function (J) being found by optimizing over the N parameters $\Omega_1, ..., \Omega_N$ using a gradient descent optimizer.

The invention also relates to a device for optimizing a quantum operation to be applied on two quantum objects of a system of quantum objects, the device comprising a controller configured to implement a method as previously described.

The invention also relates to a method for optimizing a quantum operation to be applied on at least two quantum objects of a system of quantum objects, the method comprising the following steps:

- determining an optimized pulse according to a method as previously described,
- trapping each of the at least two quantum objects in trapping sites using trapping lasers, the potential of the trapping lasers being modulated in time with a frequency $v$ so that the potential is periodic in time and quadratic in space, preferably the potential is given by the formula:

$$V(t,x) = V_0\big(1 - cos(vt)\big)x^2$$

Where:

- V is the potential of a trapping laser,
- $V_0$ is half of the maximal potential of a trapping atom,

- *v* is the frequency of the modulation,
- t is the time, and
- *x* is the position of a quantum object,
- generating the determined optimized pulse by the at least one controlled laser and applying the generated optimized pulse on the at least two quantum objects so as to realize the quantum operation.

The invention also relates to a device for optimizing a quantum operation to be applied on at least two quantum objects of a system of quantum objects, the device comprising

- a controller configured to determine the optimized pulse of the method as previously described,
- trapping lasers configured for trapping each of the at least two quantum objects according to the trapping step of the method as previously described, and
- at least one controlled laser configured to generate the determined optimized pulse and to applied the generated optimized pulse on the at least two quantum objects so as to realize the quantum operation.

BRIEF DESCRIPTION OF THE DRAWINGS

The invention will be easier to understand in view of the following description, provided solely as an example and with reference to the appended drawings in which:

- Figure 1 is a schematic representation of an example of a system of quantum objects and of an entity configured for optimizing a quantum operation to be applied on two quantum objects of a system of quantum objects,
- Figure 2 is an example of a graphic illustrating:

  ∘ a) Qubits are stored in computational basis states $|0\rangle$ and 11). The $|1\rangle$ state is coupled to a Rydberg state $|r\rangle$ with lifetime 1/y by a laser with Rabi frequency $\Omega(t)$. The amplitude of the laser has an unknown relative deviations of $\varepsilon 1$ and $\varepsilon 2$ and an unknown detuning $\Delta 1$ and $\Delta 2$ for atom 1 and 2, respectively. The van der Waals interaction leads to an energy shift B » $|\Omega|$ if both atoms are in $|r\rangle$, preventing the simultaneous excitation of both atoms.
  ∘ b) The laser phase as a function of time for the time-optimal (TO) and amplitude-robust (AR) pulse implementing the CZ gate. The amplitude of the pulses is given by $|\Omega(t)| = Qmax$.

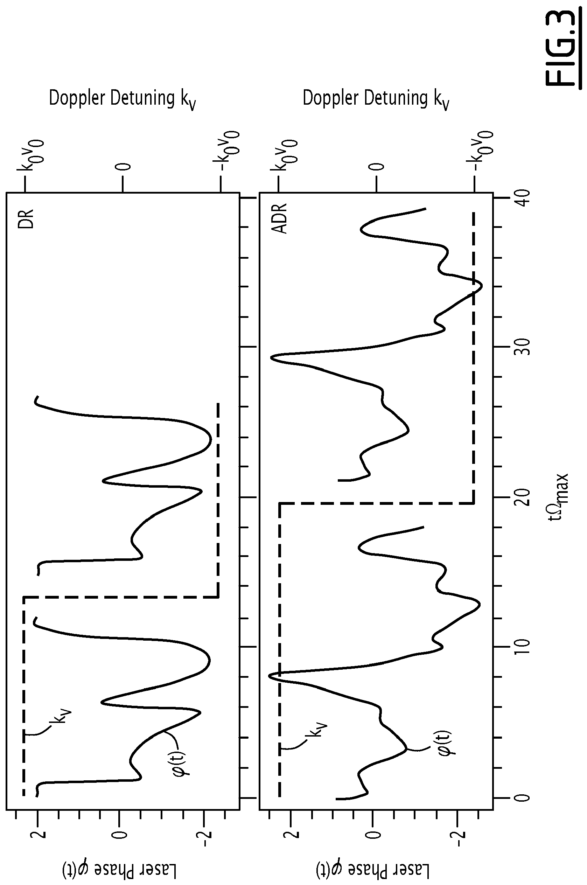

- Figure 3 is an example of a graphic illustrating the Doppler-robust (DR) and amplitude-and- Doppler-robust (ADR) pulse. Each pulse consists of two identical halves. In each of the halves the laser amplitude is maximal ($|\Omega(t)| = Qmax$), while $\Omega(t) = 0$ outside. The laser phase as a function of time is shown on the left vertical axis by the solid line of the top figure the DR pulse and by the solid line of the bottom figure for the ADR pulse. Between the two halves the sign of the detuning kv of an atom due to the Doppler effect is switched, as shown on the right, vertical axis by the dashed line. The reversal of the sign if kv can either be achieved by applying the two halves of the pulses with two different, counterpropagating lasers, or by waiting for half an oscillation of the atom in the trap.

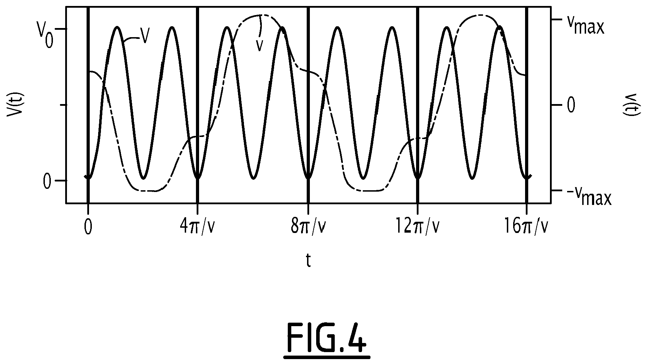

- Figure 4 is an example of a graphic illustrating the modulation of the potential of the optical tweezers trapping the atoms (in solid lines), the velocity of the atoms in the optical tweezers is illustrated in dashed lines. The two halves of the DR and ADR pulses are executed in adjacent time slots marked by the vertical lines. The velocity of the atoms is approximately constant during these time slots and switches signs between adjacent time slots.

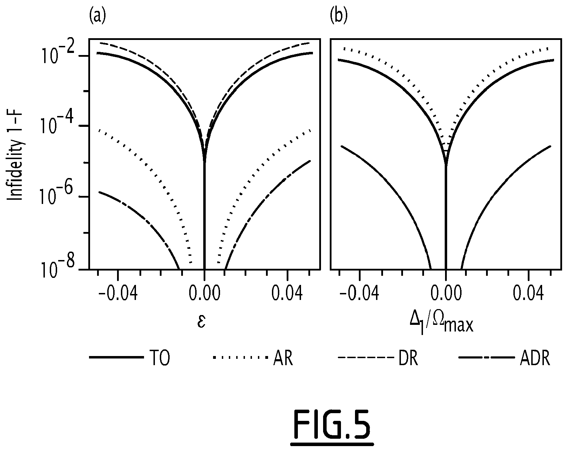

- Figure 5 is an example of a graphic illustrating:

  ∘ a) the infidelity 1 - F as a function of $\varepsilon = \varepsilon 1 = \varepsilon 2$ for the time-optimal (TO), amplitude-robust (AR), Doppler-robust (DR) and amplitude-and-Doppler-robust (ADR) pulse. We assume no errors due to a detuning of the laser ($\Delta 1 = \Delta 2 = 0$) and no error due to the decay of $|r\rangle$ ($\gamma = 0$).
  ∘ b) The infidelity 1-F as a function of the detuning $\Delta 1$ of the first atom for the same pulses as in a). We assume that the second atom experiences no detuning ($\Delta 2 = 0$), the laser amplitude is exactly known ($\varepsilon 1 = \varepsilon 2 = 0$) and there is no error due to the decay of $|r\rangle$ (y = 0).

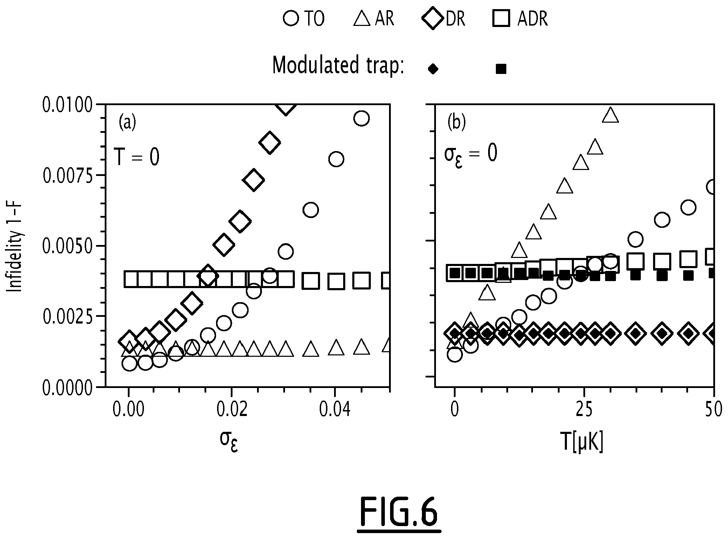

- Figure 6 is an example of a graphic illustrating the infidelity 1 - F of the TO, AR, DR and ADR pulse at different values of the amplitude uncertainty $\sigma_\varepsilon$ and the atomic temperature T. In particular, the left curve illustrates 1-F as a function of $\sigma_\varepsilon$ at T = 0. The right curve illustrates 1 - F as a function of T at $\sigma_\varepsilon = 0$. Open symbols show the results when switching the laser direction in the middle of the pulse for the DR and ADR pulse, while filled symbols show the results when modulating the trap frequency and waiting half a period of the atomic motion between the two halves of the pulses.

DETAILED DESCRIPTION OF SOME EMBODIMENTS

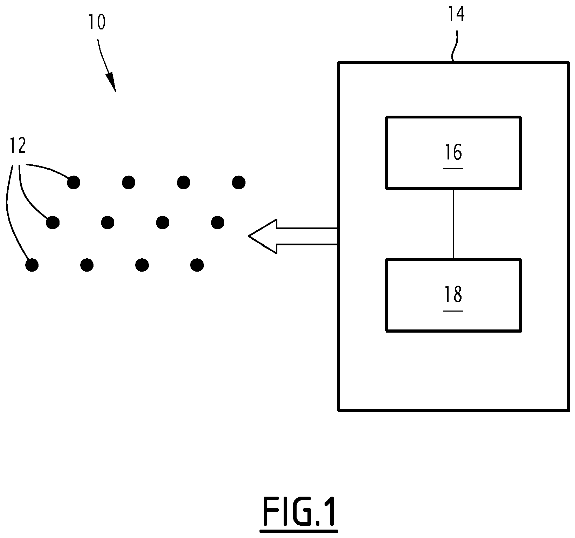

An example of a system 10 of quantum objects 12 and of an entity 14 for optimizing a quantum operation to be applied on two quantum objects 12 of a system of quantum object is illustrated on figure 1.

The system 10 of quantum objects 12 are for example intended to be part of one of the following elements: a quantum computer or a quantum sensor.

The quantum objects 12 are objects whose dynamics cannot be described using classical physics, but instead can only accurately be described using the principles of quantum mechanics.

The quantum objects 12 are for example chosen among the following elements: neutral atoms, ions, molecules, quantum dots, spin defects in solids, photons, electrons, superconducting qubits, or any other elements having two or more discrete energy levels that can be coupled to each other and to light.

In the example of the following description, the quantum objects 12 are atoms (trapped ions, neutral atoms) and preferably Rydberg atoms.

The entity 14 enables to optimize a quantum operation to be applied on two quantum objects of a system of quantum objects.

The entity 14 comprises a first device 16 and a second device 18.

The first device 16 comprises a controller configured to carry out method(s) for optimizing a quantum operation to be applied on two quantum objects of a system of quantum objects that will be described in the following of the description. The controller is for example a classical computer having a processor comprising a data processing unit, memories and a data carrier reader, and optionally a human-machine interface.

The second device 18 comprises at least one controlled laser able to generate a laser beam or laser pulses to be applied on the system 10 of quantum objects 12 to realize the quantum operations. The second device 18 is for example controlled by the first device 16 so as to generate laser pulses corresponding to the quantum operations.

The second device 18 comprises for example a signal generator and an optical modulator used to control the amplitude and phase of the light field.

Optionally, the entity 14 also comprises trapping lasers configured for trapping each of the two quantum objects as will be described later in the description.

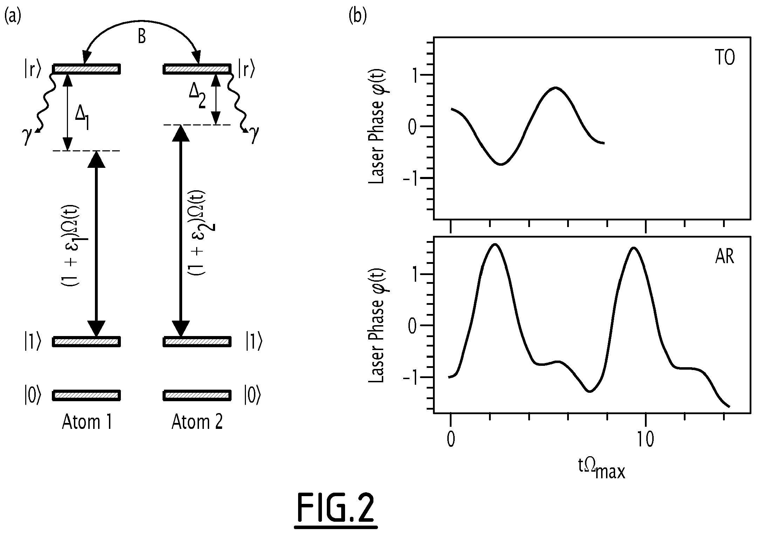

Methods for optimizing a quantum operation to be applied on two quantum objects of a system of quantum objects will now be described with reference to figures 2 to 6. The method is for example carried out by the entity 14.

In the following, the amplitude of each controlled laser has a first relative deviation $\varepsilon_1$ and a first detuning $\Delta_1$ for the first quantum object and a second relative deviation $\varepsilon_2$ and a second detuning $\Delta_2$ for the second quantum object.

The two quantum objects have a quantum state $|\Psi_q\rangle$ depending on the excitation level q of the two quantum objects. The excitation level q is chosen between 01, 10 and 11. 0 defines a de-excited state for a quantum object. 1 defines an excited state for a quantum object. The quantum state $|\Psi_q\rangle$ has a zero order term $\left|\Psi_q^{(0)}\right\rangle$ and a first order term $\left|\Psi_q^{(1)}\right\rangle$.

The at least one controlled laser has a wavevector k and each quantum object has a velocity $v_j$ along the direction of the laser propagation. The Doppler shift $\Delta_j$ of each quantum object is the product of the wavevector k of the at least one controlled laser and the velocity $v_j$ of said quantum object.

In particular, with reference to figure 2, we give below a specific in the case of Rydberg atoms. This example will then be developed in the following of the description for each considered embodiments.

We assume the level scheme shown in Fig. 2(a). Each atom is modeled as a three level system with computational basis states $|0\rangle$ and $|1\rangle$ and an auxiliary Rydberg state $|r\rangle$ with finite lifetime of $1/\gamma$. The $|1\rangle$ and $|r\rangle$ states of each atom are coupled by a single global laser pulse with Rabi frequency $\Omega(t) = |\Omega(t)|e^{i\varphi(t)}$ of amplitude $|\Omega(t)|$ and phase $\varphi(t)$. We require that at all times $|\Omega(t)| \leq Q_{max}$, where $Q_{max}$ is the maximally achievable Rabi frequency. Due to shot-to-shot fluctuations of the laser intensity the Rabi frequency at atom i (for i {1,2}) is given by $(1 + \varepsilon i)\Omega(t)$, where the relative deviation of the laser amplitude $\varepsilon i$ is unknown but assumed to be constant throughout the gate. Additionally the laser is detuned by an unknown but constant amount $\Delta i$ from the $|1\rangle \leftrightarrow |r\rangle$ transition. Finally, an interaction (e.g. a van- der-Waals, dipolar, ...) between the two atoms shifts the energy of the state $|rr\rangle$ by B » $|\Omega(t)|$, in the Rydberg blockade limit, such that the state $|rr\rangle$ is never populated. The total Hamiltonian reads H = H10⊕H01⊕H11, with

$$H_{10} = \frac{(1+\varepsilon_1)\Omega(t)}{2}10\rangle\langle r0 \vee + h.c. + \Delta_1 r0\rangle \qquad (1)$$

$$H_{01} = \frac{(1+\varepsilon_2)\Omega(t)}{2} 01\rangle\langle 0r \vee + h.c. + \varDelta_2 0r\rangle \qquad (2)$$

$$H_{11} = \frac{\sqrt{2}(1+\varepsilon_+)\Omega(t)}{2} |11\rangle\langle W_+| + h.c. + \varDelta_-|W_+\rangle\langle W_-| + h.c. + \varDelta_+(|W_+\rangle\langle W_+| + |W_-\rangle\langle W_-|) \qquad (3)$$

Here, $\left|W_\pm\right\rangle = \frac{[(1+\varepsilon_1)r1\rangle\pm(1+\varepsilon_2)1r\rangle]}{\beta}$ with $\beta = \sqrt{(1+\varepsilon_1)^2 + (1+\varepsilon_2)^2}$ the normalization, while

$\varDelta_\pm = \frac{\varDelta_1\pm\varDelta_2}{2}$ and $\frac{\varepsilon+\varepsilon_1+\varepsilon_2}{2}$, respectively. In the equation of $H_{11}$ we neglected terms in second order of $\varepsilon$ and $\Delta$.

First embodiment: AR pulse

The method comprises the determination of an optimized pulse to be generated by at least one controlled laser for implementing the quantum operation on the two quantum objects while fulfilling an amplitude robustness criterion.

The optimized pulse for the first embodiment is also called amplitude robust pulse or AR pulse in the description.

The optimized pulse is intended to be generated by the at least one controlled laser and applied on the two quantum objects so as to realize the quantum operation.

The amplitude robustness criterion states that the optimized pulse is a pulse which when applied on the two quantum objects is such that:

○ the zero order term ( $\left|\Psi_q^{(0)}\right\rangle$ ) is substantially of the form $e^{i\theta q}|q\rangle$, with $\theta_{11}$ - $\theta_{10}$ - $\theta_{01}$ = $(2n + 1)\pi$, n being an integer, and

○ the first order term ( $\left|\Psi_q^{(1)}\right\rangle$ ) is substantially equal to zero.

In the description, the term substantially means that an error tolerance is taken into account, the error tolerance is for example of 10%.

In an example of implementation, the amplitude robustness criterion states that the optimized pulse is a pulse which minimizes a cost function J. The cost function J is the sum of a first cost term $J_1$ depending on the zero order term $\left|\Psi_q^{(0)}\right\rangle$ of the quantum state and of a second cost term $J_2$ depending on the first order term $\left|\Psi_q^{(1)}\right\rangle$ of the quantum state.

Preferably, the cost function J is given by the following formula:

$$J = 1 - F + \Sigma_q \left\langle \Psi_q^{(1)} \middle| \Psi_q^{(1)} \right\rangle \qquad (4)$$

Where:

- $|q\rangle$ is the initial state, where q labels the initial excitation level of the two quantum objects
- $|\Psi_q\rangle$ is the final state when starting in the initial state $|q\rangle$

- $\left|\Psi_q^{(0)}\right\rangle$ is the zero order term of the quantum state $|\Psi_q\rangle$ in a perturbative expansion in the amplitude fluctuation of the laser

- $\left|\Psi_q^{(1)}\right\rangle$ is the first order term of the quantum state $|\Psi_q\rangle$ in a perturbative expansion in the amplitude fluctuation of the laser

- F is the fidelity of the quantum operation given by:

7

$$F = \frac{1}{16}\left|1 + \sum_{q \in \{10,01,11\}} e^{-i\theta_q} \left\langle q \middle| \Psi_q^{(0)} \right\rangle\right|^2 \tag{5}$$

Preferably, the amplitude robustness criterion states that the optimized pulse is the shortest pulse minimizing the cost function J among the pulses minimizing the cost function J.

Preferably, the optimized pulse minimizing the considered cost function is found using an algorithm (GRAPE algorithm) assuming that the pulse $\Omega(t)$ is a piecewise constant pulse of duration $\tau$ described by N parameters $\Omega_1$, ..., $\Omega_N$ as $\Omega(t) = \Omega_j$ if $t \in \left[\frac{(j-1)\tau}{N}, \frac{j\tau}{N}\right]$, j being an integer belonging to the interval [1, ..., N], the pulse $\Omega(t)$ minimizing the considered cost function J being found by optimizing over the N parameters $\Omega_1$, ..., $\Omega_N$ using a gradient descent optimizer.

The above features will now be described more precisely in the example that follows. We start by finding a pulse $\Omega(t)$ which is robust against amplitude deviations $\varepsilon_i = 0$, while $\Delta_i = 0$. We expand the Hamiltonians in $\varepsilon$ as

$$H_{10} = H_{10}^{(0)} + \varepsilon_1 H_{10}^{(1)}, \; H_{01} = H_{01}^{(0)} + \varepsilon_2 H_{01}^{(1)} \text{ and } H_{11} = H_{11}^{(0)} + \varepsilon_{+H_{11}^{(1)}} \text{ and the quantum state when starting in}$$

$|01\rangle$ as $\left|\psi_{10}\right\rangle = \left|\psi_{10}^{(0)}\right\rangle + \epsilon_1 \left|\psi_{10}^{(1)}\right\rangle + O(\epsilon_1^2)$, with analogous expansions for $|\psi_{10}\rangle$ and $|\psi_{11}\rangle$. A pulse $\Omega(t)$ of duration $\tau$ implements a CZ gate in the deviation-free case if $\left|\Psi_q^{(0)}\right\rangle = e^{i\theta_q}|q\rangle$ with $\theta_{11} - \theta_{10} - \theta_{01} = (2n+1)\pi$ for an integer n. We measure the fidelity of a gate via the Bell-State-Fidelity

$$F = \frac{1}{16}\left|1 + \sum_{q \in \{10,01,11\}} e^{-i\theta_q} \left\langle q \middle| \Psi_q^{(0)} \right\rangle\right|^2$$

The pulse is robust against amplitude deviations if $\left|\Psi_q^{(1)}\right\rangle = 0$ for all q, such that the leading term of the deviation of $|\psi_q\rangle$ from $e^{i\theta_q}|q\rangle$ is quadratic in $\varepsilon i$. To find the robust pulse we minimize the following cost function:

$$J = 1 - F + \sum_q \left\langle \Psi_q^{(1)} \middle| \Psi_q^{(1)} \right\rangle$$

using a quantum optimal control method. We choose the numerical GRAPE algorithm (Khaneja N, Reiss T, Kehlet C, Schulte-Herbrüggen T, Glaser SJ. Optimal control of coupled spin dynamics: design of NMR pulse sequences by gradient ascent algorithms. J Magn Reson. 2005 Feb;172(2):296-30) that assumes that $\Omega(t)$ is a piecewise constant pulse of duration $\tau$ described by N parameters $\Omega 1, ..., \Omega N$ as $\Omega(t) = \Omega j$ if $t$ [(j-1)$\tau$/N,j$\tau$/N]. For a given set of parameters the cost function J can be found by solving the coupled differential equations $| \Psi_q^{(0)}\rangle = -iH^{(0)}| \Psi_q^{(0)}\rangle$ and $| \Psi_q^{(1)}\rangle = -iH^{(0)}| \Psi_q^{(1)}\rangle - iH^{(1)}| \Psi_q^{(0)}\rangle$.

Now the pulse minimizing J can be found by optimizing over the $\Omega 1, ..., \Omega N$ using a gradient descent optimizer. GRAPE provides an efficient algorithm to calculate the gradient of J with respect to $\Omega j$, drastically speeding up the optimization.

We find that for any pulse duration $\tau$ longer than a certain critical $\tau* \approx 14.32/\Omega max$ there exists a pulse with J = 0, i.e. a pulse that implements a CZ gate with fidelity 1 and is robust against amplitude deviations. We refer to this shortest possible pulse with $\tau = \tau*$ as the "amplitude-robust" (AR) pulse. The AR pulse is of the form $\Omega(t) = \Omega max \exp(i\varphi(t))$, i.e. it has always maximal amplitude. The laser phase $\varphi(t)$ of the AR pulse as a function of the dimensionless time $t\Omega max$ is shown in Fig. 1(b), together with the time-optimal (TO) pulse (without any robustness) found in S.Jandura and G. Pupillo, Time-Optimal Two- and Three-Qubit Gates for Rydberg Atoms, Quantum 6, 712 (2022). We emphasize that the laser phase of the AR pulse is a smooth function of time, which is easier to implement experimentally than a pulse with discontinuities. In addition to its speed, the AR is interesting also because for $\tau > \tau*$ the fluctuations of $\varepsilon i$ during the pulse, an error against which the pulse is not robust, are found to increase.

To demonstrate the robustness of the AR pulse we calculate the infidelity 1 - F of the AR and the TO pulse at $\varepsilon 1 = \varepsilon 2 = \varepsilon$ for several values of $\varepsilon$ between -0.05 and 0.05, for $\gamma = 0$. The infidelities are displayed in Fig. 5(a). For all considered values of $\varepsilon$ the AR pulse improves upon the TO pulse by at least two orders of magnitude and even for a practically very large amplitude deviation of 5% achieves an infidelity 1-F $\approx$ 10$^{-4}$.

Second embodiment: DR pulse

The method comprises the determination of an optimized pulse to be generated by at least one controlled laser for implementing the quantum operation on the two quantum objects while fulfilling a Doppler robustness criterion.

The optimized pulse for the second embodiment is also called Doppler robust pulse or DR pulse in the description.

The optimized pulse is intended to be generated by the at least one controlled laser and applied on the two quantum objects so as to realize the quantum operation.

The Doppler robustness criterion stating that the optimized pulse is a pulse which when applied on the two quantum objects is such that:

- the zero order term ( $\left| \psi_q^{(0)} \right\rangle$ ) is substantially of the form $e^{i\theta q}|q\rangle$, with $\theta_{11}$ - $\theta_{10}$ - $\theta_{01} = \left( 2n + \frac{1}{2} \right) \pi$ , n being an integer,

- the first order term ( $\left| \psi_q^{(1,j)} \right\rangle$ ) for each quantum object is substantially along the direction of $|q\rangle$, q being the excitation level of the two quantum objects.

Preferably, the optimized pulse is a pulse formed of two identical halves. The two halves of the optimized pulse is intended to be applied on the quantum objects after each other by the at least one controlled laser so that the sign of the Doppler shift is switched between the two halves.

In an example, each half of the optimized pulse is intended to be applied with a different counterpropagating laser.

In another example, each half of the optimized pulse is intended to be applied by the same controlled laser, the controlled laser being turned off after the first half and turned back on after a waiting time so as to applied the second half, preferably the waiting time being substantially equal to $\frac{\pi}{w_{tr}}$ , $w_{tr}$ being the frequency of the change of the sign of the velocity of the quantum objects in the direction of the laser propagation.

In an example of implementation, the Doppler robustness criterion states that the optimized pulse is a pulse which minimizes a cost function J. The cost function J is the sum of a first cost term $J_1$ depending on the zero order term $\left| \psi_q^{(0)} \right\rangle$ of the quantum state and of a second cost term $J_2$ depending on the first order term $\left| \psi_q^{(1)} \right\rangle$ of the quantum state.

Preferably, the cost function (J) is given by the following formula:

$$ J = 1 - F + \sum_{q,j} \left\langle \psi_q^{(1,j)}(\tau) \middle| I - |q\rangle\langle q| \psi_q^{(1,j)}(\tau) \right\rangle \qquad (6) $$

Where:

- $|q\rangle$ is the initial state, where q labels the initial excitation level of the two quantum objects,

- $\left| \psi_q^{(0)} \right\rangle$ is the zero order term of the quantum state $|\Psi_q\rangle$,

- $\left| \psi_q^{(1)} \right\rangle$ is the first order term of the quantum state $|\Psi_q\rangle$,

- j indexing with respect to the detuning of which one of the two quantum objects the expansion is done,

- F is the fidelity of the quantum operation given by:

$$F = \frac{1}{16}\left| 1 + \sum_{q \in \{10,01,11\}} e^{-i\theta_q} \left\langle q \middle| \Psi_q^{(0)} \right\rangle \right|^2$$

- I is the identity operator,
- $\tau$ is the duration of the half of the pulse.

Preferably, the optimized pulse minimizing the considered cost function is found using an algorithm (GRAPE algorithm) assuming that the pulse $\Omega(t)$ is a piecewise constant pulse of duration $\tau$ described by N parameters $\Omega_1$, ..., $\Omega_N$ as $\Omega(t) = \Omega_j$ if $t \in \left[\frac{(j-1)\tau}{N}, \frac{j\tau}{N}\right]$, j being an integer belonging to the interval [1, ..., N], the pulse $\Omega(t)$ minimizing the considered cost function J being found by optimizing over the N parameters $\Omega_1$, ..., $\Omega_N$ using a gradient descent optimizer.

The above features will now be described more precisely in the example that follows.

The practically most relevant source of detuning error is the Doppler shift $\Delta j = kv_j$ where k is the wavevector of the laser and $v_j$ is the velocity of atom j along the direction of the laser. A robust gate can be achieved by considering pulses which consist of two identical halves which are applied after each other.

The sign of $\Delta j$ is switched between these two halves, as illustrated in Fig. 3.

We propose two methods for switching the sign of $\Delta j$. In the first method two halves are applied with different, counter- propagating lasers, thus switching the sign of k after the first half. The second method makes use of the fact that the trapping potential is approximately harmonic, and therefore the velocity in the direction of the laser prop- agation is coherent over short times, and periodic with frequency $\omega_{tr}$. The laser can thus be turned off after the first half and turned back on after a waiting time of $\pi/\omega_{tr}$, in which the velocity of the atoms will have switched sign. Only then the second half is applied.

To find a pulse which is robust against Doppler errors we use GRAPE to identify a pulse $\Omega(t)$ of duration $\tau$ that

i) implements a controlled-$Rz(\pi/2)$ gate in the detuning free case, i.e. satisfies $\left| \Psi_q^{(0)} \right\rangle = e^{i\theta_q} |q\rangle$, with $\theta_{11} - \theta_{10} - \theta_{01} = \left(2n + \frac{1}{2}\right)\pi$, n being an integer, and ii) has a first order error $\left| \Psi_q^{(1,j)} \right\rangle$ which is completely along the direction of $|q\rangle$, i.e.. The state after applying this pulse once is then

$$\left| \psi_q(\tau) \right\rangle = \left( e^{i\theta_q} + \sum_j \Delta_j \left\langle q \middle| \psi_q^{(1,j)}(\tau) \right\rangle \right) |q\rangle + O(\Delta^2) \qquad (7)$$

When applying the pulse $\Omega(t)$ a second time the sign of $\Delta j$ is switched, so that $| \Psi_q(2\tau) \rangle = e^{2i\theta_q}|q\rangle + O(\Delta^2)$ so the combined pulse is robust against Doppler errors. Note that crucially the overlap of the state $|| \Psi_q(\tau) \rangle$ with the Rydberg state after the first half is of order $O(\Delta^2)$.

This makes the gate insensitive to the relative phase of the laser between the two halves, which depends on the unknown position of the atoms. Furthermore it allows to wait for $\pi/\omega_{tr}$ between the two halves without facing a relevant error due to the decay of the Rydberg state. GRAPE can be applied to this problem analogously to the AR-case, with the cost-function J now containing the norm of instead of the norm of the whole first order contribution $\left| \psi_q^{(1)} \right\rangle$ for the AR pulse. The shortest possible pulse which is robust against Doppler errors, called the "Doppler-robust" (DR) pulse is shown in Fig. 3. Again the amplitude is given by $|\Omega(t)| = Qmax$, while the laser phase is a smooth function of time. The pulse $\Omega(t)$ has to be applied twice, with the sign of $\Delta j = kv_j$ switching in the middle.

Third embodiment: ADR pulse

The method comprises the determination of an optimized pulse to be generated by at least one controlled laser for implementing the quantum operation on the two quantum objects while fulfilling an amplitude and Doppler robustness criterion.

The optimized pulse for the third embodiment is also called amplitude Doppler robust pulse or ADR pulse in the description.

The optimized pulse is intended to be generated by the at least one controlled laser and applied on the two quantum objects so as to realize the quantum operation.

The amplitude and Doppler robustness criterion states that the optimized pulse is a pulse minimizing a total cost function. The total cost function is the sum of the cost function of the first embodiment (AR pulse) and of the cost function of the second embodiment (DR pulse).

Preferably, the optimized pulse is the shortest pulse minimizing the total cost function among the pulses minimizing the total cost function.

Preferably, the optimized pulse minimizing the considered cost function is found using an algorithm (GRAPE algorithm) assuming that the pulse $\Omega(t)$ is a piecewise constant pulse of duration $\tau$ described by N parameters $\Omega_1$, ..., $\Omega_N$ as $\Omega(t) = \Omega_j$ if $t \in \left[\frac{(j-1)\tau}{N}, \frac{j\tau}{N}\right]$, j being an integer belonging to the interval [1, ..., N], the pulse $\Omega(t)$ minimizing the considered cost function J being found by optimizing over the N parameters $\Omega_1$, ..., $\Omega_N$ using a gradient descent optimizer.

Preferably, the optimized pulse is a pulse formed of two identical halves. The two halves of the optimized pulse is intended to be applied on the quantum objects after each other by the at least one controlled laser so that the sign of the Doppler shift is switched between the two halves.

In an example, each half of the optimized pulse is intended to be applied with a different counterpropagating laser.

In another example, each half of the optimized pulse is intended to be applied by the same controlled laser, the controlled laser being turned off after the first half and turned back on after a waiting time so as to applied the second half, preferably the waiting time being substantially equal to $\frac{\pi}{w_{tr}}$, $w_{tr}$ being the frequency of the change of the sign of the velocity of the quantum objects in the direction of the laser propagation.

The above features will now be described more precisely in the example that follows.

Additionally we identify the shortest possible pulse which is both amplitude- and Doppler robust (ADR). This pulse can be found using GRAPE by simply adding the cost functions for the AR and the DR case. The laser phase of the ADR pulse is displayed in Fig. 3a), while the amplitude is again given by $\Omega_{max}$.

The infidelity of all four pulses (TO, AR, DR and ADR) as a function of the detuning $\Delta 1$ of the first atom is shown in Fig. 5b). For the TO and AR pulse the detuning is kept constant, while for the DR and ADR it switches sign after the first half of the pulse. We observe that the DR and ADR pulse always have very similar infidelities and outperform the TO and AR pulse by two to three orders of magnitude. Even at a large detuning of $\Delta 1 = 0.05\Omega_{max}$ the infidelity is below $10^{-4}$. We also compare the performance of the DR and ADR pulse to the TO and AR pulse when varying the amplitude deviation $\varepsilon$ in Fig. 5a). As expected the DR pulse does not show any robustness to amplitude deviations and behaves similar to the TO pulse, while the ADR pulse clearly outperforms the TO pulse by at least three orders of magnitude and gives infidelities even below those of the AR pulse.

Fourth embodiment: Modulation of trapping lasers + DR or ADR pulse

The method comprises the determination of an optimized pulse, for example a DR pulse using the method of the second embodiment or an ADR pulse using the method of the third embodiment.

According to the fourth embodiment, the two quantum objects are trapped in trapping sites with trapping lasers, the potential of the trapping lasers being modulated in time with a frequency $v$ so that the potential is periodic in time t and quadratic in space x.

Preferably, the potential is given by the following formula:

$$V(t,x) = V_0\big(1 - cos(vt)\big)x^2 \qquad (8)$$

Where:

- V is the potential of a trapping laser,
- $V_0$ is half of the maximal potential of a trapping atom,
- $v$ is the frequency of the modulation,
- t is the time, and
- x is the position of a quantum object,

The method also comprises generating the determined optimized pulse by the at least one controlled laser and applying the generated optimized pulse on the two quantum objects so as to realize the quantum operation.

Preferably, the pulses are centered on times when the potential is zero, ie. $t = 2\pi n/v$, where n is an integer, such that the velocity of the atom is approximately constant over the duration of the pulse and the AC Stark shift of the atomic states is approximately zero over the duration of the pulse.

Preferably, the frequency of the modulation is chosen to be superior to 4 times, approximately equal to 4.079 times the oscillation frequency of the atom in the un-modulated potential:

$$V(t,x) = V_0 x^2$$

such that the atomic velocity at the time of the first pulse, centered on t = $2\pi n/v$ is nearly exactly opposite the velocity at the time of the second pulse, centered on $t = 2\pi (n + 4m + 2)/v$, where n and m are integers, and m $\geq$ 0.

The modulation frequency can also be approximately 6.046 times the oscillation frequency in the un-modulated potential, such that the atomic velocity at the time of the first pulse, centered on $t = 2\pi n/v$ is nearly exactly opposite the velocity at the time of the second pulse, centered on $t = 2\pi (n + 6m + 3)/v$, where n and m are integers, and m $\geq$ 0.

The modulation frequency can also be chosen to be a larger multiple of the oscillation frequency in the un-modulated potential, such that the atomic velocity is nearly exactly opposite between two times when the instantaneous potential is zero.

The above features will now be described more precisely in the example that follows.

A major error that the DR and the ADR pulse are not robust against is the change of the velocities of the atoms during each of the two subpulses. In the following we provide a method to achieve approximately constant velocities during the pulses, thus reducing the conditional infidelity of the DR and ADR pulses by another one to two orders of magnitude.

We propose to modulate the potential V induced by the optical tweezers trapping the atoms sinusoidally in time with frequency v, so that it is given by

$$V(t,x) = V_0\big(1 - cos(vt)\big)x^2$$

The evolution of the atoms in the trap is thus governed by $\ddot{x} = \frac{-2V_0}{m}\big(1 - cos(vt)\big)x$ , which is a rescaled version of the Mathieu differential equation. According to Floquets theorem the solutions are of the form x(t) = $e^{i\omega tr t}y(t)$ + c.c. where y is a $2\pi/v$ periodic function and $2\omega_{tr}/v$ is called the Mathieu characteristic exponent. While $\omega_{tr}$ can in general be complex, it has been shown that $\omega_{tr}$ R for sufficiently large v. For example, in the limit v $\to \infty$ the potential V (t) can be replaced by its time average and we obtain simply $\omega_{tr}$ = $\sqrt{2 V_0/m}$ .

We now apply the two subpulses that make up the DR and ADR pulse at times t1 = $2\pi n_1/v$ and t2= $2\pi n_2/v$, where $n_1$ and $n_2$ are integers. In this way V (t1) = V (t2) = 0, so the atoms move with a constant velocity. Since we require v(t1) = -v(t2) the relation (t2 -t1)$\omega$tr = $\pi$ has to be satisfied so that v = 2($n_2$ - $n_1$)$\omega_{tr}$.

For a given value of V0 and (n2-n1) we can now numerically find v by first finding the Mathieu characteristic exponent $\omega_{tr}$. Real solutions for v exist for n2-n1 superior or equal to 2, to ensure that the duration of the time slots with almost constant velocity is as long as possible we take n2-n1=2 and find

$$v=4.079\sqrt{\frac{2V_0}{m}}$$

The potential V (t) and the exemplary velocity v of an atom moving in this potential are shown in Fig. 6). The two subpulses making up the DR and ADR pulse are to be applied in two adjacent time slots marked by the vertical bars. As can be observed from the figure, the velocity is flat at these time slots, and changes sign between any two adjacent time slots. An additional advantage of the sinusoidal modulation which is not captured in our model is that errors arising from different trapping strengths of different states as well as errors arising from position depending light shifts are minimized because the V is at its minimum during the two subpulses.

For the DR pulse the trap modulation leads to an improvement by approximately one order of magnitude, while for the longer ADR pulse it even leads to an improvement of two orders of magnitude. For both pulses the infidelity at T = 30$\mu$K is below $10^{-5}$.

In addition, the modulation of the trap frequencies also increases the robustness against differential light shifts induced by the trapping laser between the computational subspace and the Rydberg state.

EP 4 345 698 A1

Annex: Infidelities in a realistic error model

So far we have neglected the decay of the Rydberg state and have assumed that the Doppler detuning is constant throughout each half of the pulses while neglecting that the velocity also changes during each half. To account for these effects we now study the performance of the TO, AR, DR and ADR pulse in a more realistic model. For this we assume that the initial velocity and the initial position of the atoms are independent and have a normal distribution with standard deviation $\sqrt{\frac{k_B T}{m}}$ and $\sqrt{\frac{k_B T}{m w_{tr}^2}}$ respectively, where T is the temperature of the atoms. We then assume that the atoms follow the classical trajectory in the harmonic oscillator describing the trap and that the Rabi frequency is modified as $\Omega(t) = e^{-ikx(t)}\Omega(t)$ Furthermore, we assume that $\varepsilon 1 = \varepsilon 2 = \varepsilon$ (e.g. because the amplitude deviations arise from amplitude fluctuations of the laser itself and not from position fluctuations of the atoms), and that $\varepsilon$ has a normal distribution with standard deviation $\sigma_\varepsilon$. We consider parameters that are experimentally realistic for metastable $^{171}$Yb qubits using single- photon excitation to the Rydberg state. The specific numerical values considered are: $\Omega max = 2\pi \times 5.5MHz$, $2\pi/k$ = 302nm, $1/y = 100\mu s$, $\omega_{tr} = 2\pi \times 50kHz$ and m = 171u.

The infidelity as a function of $\sigma_\varepsilon$ in the T = 0 case is shown in Fig. 6 left. For small values of $\sigma_\varepsilon$ the decay of the Rydberg state dominates, so that the pulse spending the least time in the Rydberg state has the lowest infidelity. The order of the pulses by increasing time spent in the Rydberg state (in our case identical to increasing pulse duration) is TO, AR, DR, ADR. As $\sigma_\varepsilon$ increases the infidelity of the AR and ADR pulses stays almost constant, while the infidelity of the TO and DR pulse increases quadratically. At $\sigma_\varepsilon \gtrsim 0.010$ the AR pulse becomes favourable compared to the TO pulse, at $\sigma_\varepsilon \gtrsim 0.026$ the ADR robust pulse becomes favorable compared to the TO pulse. The AR pulse always outperforms the ADR pulse, because both pulses are robust to deviations of the laser amplitude, but the AR pulse spends less time in the Rydberg state.

The infidelity as a function of T in the $\sigma_\varepsilon = 0$ case is shown in Fig.6 right by the open markers. Again at low temperatures the pulses are ordered by the time they spent in the Rydberg state. With increasing temperature the infidelity of the DR and ADR pulse stays almost constant, while the infidelity of the TO and AR pulse increases linearly with T (and thus quadratically with $\Delta$). For $T \gtrsim 6\mu K$ the DR pulse outperforms the TO pulse, for $T \gtrsim 28\mu K$ the ADR pulse outperforms the DR pulse.

Despite being robust against static Doppler shifts, the DR and ADR gate infidelities have a slight linear dependence on the temperature when the harmonic motion of the atoms is incorporated (open symbols in Fig. 6 right). This results from the fact that the atomic velocity is not exactly constant over the finite duration of each half of the pulse, because of the acceleration of the atom from the dipole trap. We find that this can be suppressed by modulating the dipole trap sinusoidally at approximately four times the trap period, centering the pulse halves on the times where the dipole trap intensity is zero, and waiting for half an osillation period of the atoms between applying the two halves of the pulse. Since the trap intensity is reduced during the gates, the velocity is nearly constant. We analyze this approach further in the fourth embodiment. As seen in by the filled symbols in Fig. 6 right, this eliminates the linear dependence of the fidelity on the temperature for the DR and ADR pulses. We also note that this will strongly suppress light shifts on the Rydberg transition from the dipole trap.

We also study the infidelity (including the trap modulation for the DR and ADR pulse) for the TO, AR, DR and ADR pulse as a function of $\sigma_\varepsilon$ and T. As expected the TO pulse is the best pulse for low amplitude uncertainties and low temperatures, while ADR pulse is the best pulse for large amplitude uncertainties and large temperatures. The AR and DR pulses are the best choice when either the amplitude uncertainty or the temperature is large while the other quantity is small. Remarkably the infidelity of the ADR pulse is practically constant for the considered region up to $\sigma_\varepsilon$ = 0.05 and T = 50$\mu$K, taking values between 1 - F = 0.0038 and 1 - F = 0.0040.

Conclusion of the examples

We have presented three new laser pulses which implement a CZ gate using a global laser and are robust against amplitude deviations of the laser (AR pulse), Doppler shifts (DR pulse) or both error sources (ADR pulse). The pulses were found using the quantum optimal control method GRAPE and require for robustness against Doppler shifts that the sign of the Doppler detuning is switched after the first half of the pulse. Our robust pulses reduce the infidelity arising from amplitude deviations and Doppler shifts by several orders of magnitude at the cost of a larger error due to decay of the Rydberg state. We found the imperfection levels at which the robust pulses outperform the TO pulse and showed that for moderate Temperatures of $\gtrsim 6\mu K$ or moderate amplitude deviations of $\gtrsim 1\%$ the TO pulse is outperformed by one of the robust pulses.

Our results show that FTQC on Rydberg atoms can be achieved without cooling the atoms close to the ground state of the traps and without requiring large intensity uniformity of the Rydberg laser. The larger admissible temperature also allows for longer circuits to be executed before heating of the atoms during the computations becomes a limiting factor. The larger tolerance to the laser intensity allows one global laser beam to address more atoms, because also atoms which are not in the center of the beam, where the intensity is maximal, can be addressed. Finally we believe that the end-to-end approach of optimizing quantum gates for logical qubit performance instead of physical gate fidelity may be applied to other qubit platforms.

In addition, it should be noted that the description gave an example with only two quantum objects. However, it can be applied to more quantum objects, for example 3 quantum objects.

## Claims

1. A method for optimizing a quantum operation to be applied on at least two quantum objects (12) of a system (10) of quantum objects, the method comprising the determination of an optimized pulse to be generated by at least one controlled laser for implementing the quantum operation on the at least two quantum objects (12) while fulfilling an amplitude robustness criterion, the at least two quantum objects (12) having a quantum state ($|\Psi_q\rangle$) depending on the excitation level (q) of the at least two quantum objects (12), the excitation level (q) being chosen between 01, 10 and 11, 0 defining a de-excited state for a quantum object and 1 defining an excited state for a quantum object,

   the quantum state ($|\Psi_q\rangle$) having a zero order term ($\left|\Psi_q^{(0)}\right\rangle$) and a first order term ($\left|\Psi_q^{(1)}\right\rangle$), the amplitude robustness criterion stating that the optimized pulse is a pulse which when applied on the at least two quantum objects (12) is such that:

   ○ the zero order term ($\left|\Psi_q^{(0)}\right\rangle$) is substantially of the form $e^{i\theta_q}|q\rangle$, with $\theta_{11} - \theta_{10} - \theta_{01} = (2n+1)\pi$, n being an integer,

   ○ the first order term ($\left|\Psi_q^{(1)}\right\rangle$) is substantially equal to zero,

   the optimized pulse being intended to be generated by the at least one controlled laser and applied on the at least two quantum objects (12) so as to realize the quantum operation.

2. A method according to claim 1, wherein the amplitude robustness criterion states that the optimized pulse is a pulse which minimizes a cost function (J), the cost function (J) being the sum of a first cost term ($J_1$) depending on the

   zero order term ($\left|\Psi_q^{(0)}\right\rangle$) of the quantum state and of a second cost term ($J_2$) depending on the first order term

   ($\left|\Psi_q^{(1)}\right\rangle$) of the quantum state.

3. A method according to claim 2, wherein the cost function (J) is given by the following formula:

$$J = 1 - F + \sum_q \left\langle \Psi_q^{(1)} \middle| \Psi_q^{(1)} \right\rangle$$

   Where:

   - $|q\rangle$ is the initial state, where q labels the initial excitation level of the at least two quantum objects,
   - $|\Psi_q\rangle$ is the final state when starting in the initial state $|q\rangle$,
   - $\left|\Psi_q^{(0)}\right\rangle$ is the zero order term of the quantum state $|\Psi_q\rangle$,
   - $\left|\Psi_q^{(1)}\right\rangle$ is the first order term of the quantum state $|\Psi_q\rangle$,

- F is the fidelity of the quantum operation given by:

$$F = \frac{1}{16}\left|1 + \sum_{q\in\{10,01,11\}} e^{-i\theta_q}\left\langle q\middle|\Psi_q^{(0)}\right\rangle\right|^2$$

4. A method according to claim 2 or 3, wherein the amplitude robustness criterion states that the optimized pulse is the shortest pulse minimizing the cost function (J) among the pulses minimizing the cost function (J).

5. A method for optimizing a quantum operation to be applied on at least two quantum objects (12) of a system (10) of quantum objects (12), the method comprising the determination of an optimized pulse to be generated by at least one controlled laser for implementing the quantum operation on the at least two quantum objects (12) while fulfilling a Doppler robustness criterion, the at least two quantum objects (12) having a quantum state ($|\Psi_q\rangle$) depending on the excitation level (q) of the at least two quantum objects (12), the excitation level (q) being chosen between 01, 10 and 11, 0 defining a de-excited state for a quantum object and 1 defining an excited state for a quantum object, the quantum state ($|\Psi_q\rangle$) having a zero order term ($\left|\Psi_q^{(0)}\right\rangle$) and a first order term ($\left|\Psi_q^{(1)}\right\rangle$) the Doppler robustness criterion stating that the optimized pulse is a pulse which when applied on the at least two quantum objects (12) is such that:

    ○ the zero order term ($\left|\Psi_q^{(0)}\right\rangle$) is substantially of the form $e^{i\theta q}|q\rangle$, with $\theta_{11} - \theta_{10} -$ $\theta_{01} = \left(2n + \frac{1}{2}\right)\pi$ , n being an integer,

    ○ the first order term ($\left|\Psi_q^{(1,j)}\right\rangle$) for each quantum object is substantially along the direction of $|q\rangle$, q being the excitation level of the at least two quantum objects (12),

    the optimized pulse being intended to be generated by the at least one controlled laser and applied on the at least two quantum objects (12) so as to realize the quantum operation.

6. A method according to claim 5, wherein the at least one controlled laser has a wavevector (k) and each quantum object has a velocity ($v_j$) along the direction of the laser propagation, the Doppler shift ($\Delta_j$) of each quantum object being the product of the wavevector (k) of the at least one controlled laser and the velocity ($v_j$) of said quantum object, the optimized pulse being a pulse formed of two identical halve, the two halves of the optimized pulse being intended to be applied on the quantum objects (12) after each other by the at least one controlled laser so that the sign of the Doppler shift is switched between the two halves.

7. A method according to claim 6, wherein each half of the optimized pulse is intended to be applied with a different counterpropagating laser.

8. A method according to claim 6, wherein each half of the optimized pulse is intended to be applied by the same controlled laser, the controlled laser being turned off after the first half and turned back on after a waiting time so as to applied the second half, preferably the waiting time being substantially equal to $\frac{\pi}{w_{tr}}$ , $w_{tr}$ being the frequency of the change of the sign of the velocity of the quantum objects (12) in the direction of the laser propagation.

9. A method according to any one of claims 1 to 8, wherein the Doppler robustness criterion states that the optimized pulse is a pulse which minimizes a cost function (J), the cost function (J) being the sum of a first cost term ($J_1$) depending on the zero order term ($\left|\Psi_q^{(0)}\right\rangle$) of the quantum state and of a second cost term ($J_2$) depending on

the first order term ( $\left|\Psi_q^{(1)}\right\rangle$ ) of the quantum state.

10. A method according to claim 9, wherein the cost function (J) is given by the following formula:

$$J = 1 - F + \sum_{q,j} \left\langle \Psi_q^{(1,j)}(\tau) \middle| I - |q\rangle\langle q| \Psi_q^{(1,j)}(\tau) \right\rangle$$

- $|q\rangle$ is the initial state, where q labels the initial excitation level of the at least two quantum objects ,
- $\left|\Psi_q^{(0)}\right\rangle$ is the zero order term of the quantum state $|\Psi_q\rangle$,
- $\left|\Psi_q^{(1)}\right\rangle$ is the first order term of the quantum state $|\Psi_q\rangle$,
- j indexing with respect to the detuning of which one of the at least two quantum objects the expansion is done,
- F is the fidelity of the quantum operation given by:

$$F = \frac{1}{16} \left| 1 + \sum_{q\in\{10,01,11\}} e^{-i\theta_q} \left\langle q \middle| \Psi_q^{(0)} \right\rangle \right|^2$$

- I is the identity operator,
- $\tau$ is the duration of the half of the pulse.

11. A method for optimizing a quantum operation to be applied on at least two quantum objects (12) of a system (10) of quantum objects (12), the method comprising the determination of an optimized pulse to be generated by at least one controlled laser for implementing the quantum operation on the at least two quantum objects (12) while fulfilling an amplitude and Doppler robustness criterion, the at least two quantum objects (12) having a quantum state ($|\Psi_q\rangle$) depending on the excitation level (q) of the at least two quantum objects (12), the excitation level (q) being chosen between 01, 10 and 11, 0 defining a de-excited state for a quantum object and 1 defining an excited state for a quantum object, the quantum state ($|\Psi_q\rangle$) having a zero order term ( $\left|\Psi_q^{(0)}\right\rangle$ ) and a first order term ( $\left|\Psi_q^{(1)}\right\rangle$ ), the amplitude and Doppler robustness criterion stating that the optimized pulse is a pulse minimizing a total cost function, the total cost function being the sum of the cost function of claim 2 or 3 and of the cost function of claim 9 or 10, preferably the optimized pulse being the shortest pulse minimizing the total cost function among the pulses minimizing the total cost function, the optimized pulse being intended to be generated by the at least one controlled laser and applied on the at least two quantum objects (12) so as to realize the quantum operation.

12. A method according to any one of claim 2 to 4 or 9 to 11, wherein the laser pulses minimizing the considered cost function are found using an algorithm assuming that the pulse ($\Omega(t)$) is a piecewise constant pulse of duration $\tau$ described by N parameters $\Omega_1$, ..., $\Omega_N$ as $\Omega(t)= \Omega_j$ if $t \in \left[\frac{(j-1)\tau}{N}, \frac{j\tau}{N}\right]$ , j being an integer belonging to the interval [1, ..., N], the pulse ($\Omega(t)$) minimizing the considered cost function (J) being found by optimizing over the N parameters $\Omega_1$, ..., $\Omega_N$ using a gradient descent optimizer.

13. A device for optimizing a quantum operation to be applied on at least two quantum objects (12) of a system (10) of quantum objects (12), the device comprising a controller configured to implement a method according to any one of claims 1 to 12.

14. A method for optimizing a quantum operation to be applied on at least two quantum objects (12) of a system (10)

of quantum objects (12), the method comprising the following steps:

- determining an optimized pulse according to the method of any one of claim 5 to 12,
- trapping each of the at least two quantum objects (12) in trapping sites using trapping lasers, the potential of the trapping lasers being modulated in time with a frequency $v$ so that the potential is periodic in time and quadratic in space, preferably the potential is given by the formula:

$$V(t,x) = V_0\big(1 - cos(vt)\big)x^2$$

Where:

- V is the potential of a trapping laser,
- $V_0$ is half of the maximal potential of a trapping atom,
- $v$ is the frequency of the modulation,
- t is the time, and
- x is the position of a quantum object,
- generating the determined optimized pulse by the at least one controlled laser and applying the generated optimized pulse on the at least two quantum objects (12) so as to realize the quantum operation.

15. A device for optimizing a quantum operation to be applied on at least two quantum objects (12) of a system (10) of quantum objects (12), the device comprising

- a controller configured to determine the optimized pulse of the method of claim 14,
- trapping lasers configured for trapping each of the at least two quantum objects (12) according to the trapping step of the method of claim 14, and
- at least one controlled laser configured to generate the determined optimized pulse and to applied the generated optimized pulse on the at least two quantum objects (12) so as to realize the quantum operation.

FIG.1

FIG.2

FIG.3

EP 4 345 698 A1

## FIG.4

FIG.5

## FIG.6

EP 4 345 698 A1

Europäisches
Patentamt

European
Patent Office

Office européen
des brevets

# EUROPEAN SEARCH REPORT

Application Number

EP 22 30 6463

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | ALICE PAGANO ET AL: "Error-budgeting for a controlled-phase gate with strontium-88 Rydberg atoms", ARXIV.ORG, CORNELL UNIVERSITY LIBRARY, 201 OLIN LIBRARY CORNELL UNIVERSITY ITHACA, NY 14853, 12 May 2022 (2022-05-12), XP091217616, * abstract; figures 1, 2(a) * * Equation (4) * * section I, lines 51-54 * * section II, lines 1-54 * * section II, lines 64-69 * * section II, lines 79-82 * * page 3, column 2, line 53 - line 57 * * section I, lines 1-3 * ----- | 1-4, 12-15 | INV. G06N10/40 |
| X | YUAN SUN ET AL: "Doppler-insensitive two-qubit controlled-PHASE gate protocol with dual-pulse off-resonant modulated driving for neutral atoms", ARXIV.ORG, CORNELL UNIVERSITY LIBRARY, 201 OLIN LIBRARY CORNELL UNIVERSITY ITHACA, NY 14853, 10 December 2019 (2019-12-10), XP081548658, * page 1, column 2, line 32 - page 2, column 1, line 8 * * page 4, column 1, line 20 - line 26 * * abstract; figure 1 * * page 3, column 2, line 15 - line 20 * * page 2, column 2, line 1 - line 21 * * page 4, column 1, line 7 - line 13 * * page 2, column 2, line 35 - line 36 * ----- -/-- | 5-10, 12-15 | TECHNICAL FIELDS SEARCHED (IPC) G06N |

The present search report has been drawn up for all claims

| Place of search | Date of completion of the search | Examiner |
|---|---|---|
| The Hague | 22 June 2023 | Aoun, Marc |

EPO FORM 1503 03.82 (P04C01)

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

page 1 of 2

## EUROPEAN SEARCH REPORT

Application Number

EP 22 30 6463

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | SAFFMAN M ET AL: "Symmetric Rydberg controlled-Z gates with adiabatic pulses", ARXIV.ORG, CORNELL UNIVERSITY LIBRARY, 201 OLIN LIBRARY CORNELL UNIVERSITY ITHACA, NY 14853, 5 June 2020 (2020-06-05), XP081681224, DOI: 10.1103/PHYSREVA.101.062309 * abstract; figure 1; table 1 * * section II, lines 1-14 * * section III-A, lines 1-5 * * section III-B, lines 11-36 * * section IV, lines 1-5 * * page 2, column 1, line 22 - line 25 * * page 4, column 1, line 10 - line 14 * * equations (3a) and (3b) * ----- | 11-15 | |
| A,D | SVEN JANDURA ET AL: "Time-Optimal Two- and Three-Qubit Gates for Rydberg Atoms", ARXIV.ORG, CORNELL UNIVERSITY LIBRARY, 201 OLIN LIBRARY CORNELL UNIVERSITY ITHACA, NY 14853, 8 May 2022 (2022-05-08), XP091217154, * the whole document * ----- | 1-15 | TECHNICAL FIELDS SEARCHED (IPC) |
| A | LI X X ET AL: "Single temporal-pulse-modulated parameterized controlled-phase gate for Rydberg atoms", ARXIV.ORG, CORNELL UNIVERSITY LIBRARY, 201 OLIN LIBRARY CORNELL UNIVERSITY ITHACA, NY 14853, 15 September 2022 (2022-09-15), XP091318352, * the whole document * ----- | 1-15 | |

The present search report has been drawn up for all claims

| Place of search | Date of completion of the search | Examiner |
|---|---|---|
| The Hague | 22 June 2023 | Aoun, Marc |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
........................................................................
& : member of the same patent family, corresponding
    document

EPO FORM 1503 03.82 (P04C01)

page 2 of 2

Europäisches
Patentamt

European
Patent Office

Office européen
des brevets

**Application Number**

**EP 22 30 6463**

## CLAIMS INCURRING FEES

The present European patent application comprised at the time of filing claims for which payment was due.

☐ Only part of the claims have been paid within the prescribed time limit. The present European search report has been drawn up for those claims for which no payment was due and for those claims for which claims fees have been paid, namely claim(s):

☐ No claims fees have been paid within the prescribed time limit. The present European search report has been drawn up for those claims for which no payment was due.

## LACK OF UNITY OF INVENTION

The Search Division considers that the present European patent application does not comply with the requirements of unity of invention and relates to several inventions or groups of inventions, namely:

    see sheet B

☒ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☐ None of the further search fees have been paid within the fixed time limit. The present European search report has been drawn up for those parts of the European patent application which relate to the invention first mentioned in the claims, namely claims:

☐ The present supplementary European search report has been drawn up for those parts of the European patent application which relate to the invention first mentioned in the claims (Rule 164 (1) EPC).

Europäisches
Patentamt

European
Patent Office

Office européen
des brevets

**LACK OF UNITY OF INVENTION
SHEET B**

**Application Number**

**EP 22 30 6463**

The Search Division considers that the present European patent application does not comply with the requirements of unity of invention and relates to several inventions or groups of inventions, namely:

```
1. claims: 1-4(completely); 12-15(partially)
```

```
A method (and corresponding device comprising a controller
configured to implement said method) for optimizing a
quantum operation to be applied on at least two quantum
objects of a system of quantum objects, the method
comprising the determination of an optimized pulse to be
generated by at least one controlled laser for implementing
the quantum operation on the at least two quantum objects
while fulfilling an amplitude robustness criterion stating
that the optimized pulse is a pulse which when applied on
the at least two quantum objects is such that the first
order term of the objects quantum state is substantially
equal to zero, the optimized pulse being intended to be
generated by the at least one controlled laser and applied
on the at least two quantum objects so as to realize the
quantum operation.
                          ---
```

```
2. claims: 5-10(completely); 12-15(partially)
```

```
A method (and corresponding device comprising a controller
configured to implement said method) for optimizing a
quantum operation to be applied on at least two quantum
objects of a system of quantum objects, the method
comprising the determination of an optimized pulse to be
generated by at least one controlled laser for implementing
the quantum operation on the at least two quantum objects
while fulfilling a Doppler robustness criterion stating that
the optimized pulse is a pulse which when applied on the at
least two quantum objects is such that the first order term
of the objects quantum state is substantially along the
direction of |q>, q being the excitation level of the at
least two quantum objects, the optimized pulse being
intended to be generated by the at least one controlled
laser and applied on the at least two quantum objects so as
to realize the quantum operation.
                          ---
```

```
3. claims: 11(completely); 12-15(partially)
```

```
A method (and corresponding device comprising a controller
configured to implement said method) for optimizing a
quantum operation to be applied on at least two quantum
objects of a system of quantum objects, the method
comprising the determination of an optimized pulse to be
generated by at least one controlled laser for implementing
the quantum operation on the at least two quantum objects
while fulfilling an amplitude and Doppler robustness
criterion stating that the optimized pulse is a pulse
minimizing a (total) cost function, the optimized pulse
```

page 1 of 2

27

Europäisches
Patentamt

European
Patent Office

Office européen
des brevets

**LACK OF UNITY OF INVENTION
SHEET B**

The Search Division considers that the present European patent application does not comply with the requirements of unity of invention and relates to several inventions or groups of inventions, namely:

```
being intended to be generated by the at least one
controlled laser and applied on the at least two quantum
objects so as to realize the quantum operation.
                        ---
```

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **KHANEJA N ; REISS T ; KEHLET C ; SCHULTE-HERBRÜGGEN T ; GLASER SJ.** Optimal control of coupled spin dynamics: design of NMR pulse sequences by gradient ascent algorithms. *J Magn Reson.,* February 2005, vol. 172 (2), 296-30

- **S.JANDURA ; G. PUPILLO.** Time-Optimal Two- and Three-Qubit Gates for Rydberg Atoms. *Quantum,* 2022, vol. 6, 712